Europäisches Patentamt

**European Patent Office**

Office européen des brevets

(11) Publication number: **0 043 281**
**A2**

(12) # EUROPEAN PATENT APPLICATION

(21) Application number: **81302965.9**

(22) Date of filing: **30.06.81**

(51) Int. Cl.³: **C 08 J 5/18**

(30) Priority: **02.07.80 GB 8021641**

(43) Date of publication of application:
**06.01.82 Bulletin 82/1**

(84) Designated Contracting States:
**BE DE FR NL SE**

(71) Applicant: **BXL Plastics Limited**
**3 St. James's Square**
**London, SW1(GB)**

(72) Inventor: **Suggate, John Reginald BXL Plastics Limited**
**Darton Factory Huddersfield Road Darton**
**Barnsley Yorkshire, S75 4NA(GB)**

(74) Representative: **Ryan, Edward Terrence**
**BP INTERNATIONAL LIMITED Patents and Licensing**
**Division Chertsey Road**
**Sunbury-on-Thames Middlesex, TW16 7LN(GB)**

(54) Plastics film.

(57) A packaging film having reduced slip comprises an ethylene copolymer matrix and a uniformly distributed particulate organic solid of defined particle size e.g. high molecular weight high density polyethylene.

EP 0 043 281 A2

1

# PLASTICS FILM

The present invention relates to a plastics film article.

Thermoplastic films are normally produced with a smooth glossy surface with a low co-efficient of friction. When such films are used to wrap articles, problems may arise in the storage and handling of articles wrapped in such film due to the tendency of the wrapped articles to slide relative to one another.

GB 1 533 027 proposed to overcome this problem by making a composite plastics film having foamed and unfoamed layers. Such a film is expensive to make and cheaper alternatives are desirable.

There have been various proposals for modifying the surface properties of thermoplastic film for various purposes.

GB 951 786 discloses the addition of a finely divided solid to thermoplastic material before it is stretched e.g. by bubble inflation i.e. blowing to give a film. The incorporation of such solid particles is said to enable the film to be written on. The only solid materials disclosed are inorganic materials such as calcium carbonate. Such inorganic fillers have the disadvantage that if the film is stretched beyond a certain point during film forming process, void formation may take place leading to the formation of an opaque product, which may be undesirable. It is also difficult to blow film satisfactorily i.e. without rupturing the bubble, if the polymer contains any substantial amount of such inorganic solids with a particle dimension in the direction of, and which is greater than, the thickness of the film being produced.

Australian patent Specification 217 890 discloses the addition of finely divided particulate solid to thermoplastic material before it is formed into film. This specification mentions the addition of organic compounds, including polymers but exemplifies only inorganic materials. The finely divided material is added to reduce the tendency of thermoplastic film to "block" i.e. the tendency for two adjacent sheets to adhere together so as to be difficult to separate. The specification explains that "blocking" has no necessary relation with case of slip.

It has been proposed to incorporate ultra high molecular weight high density polyethylene in powdered form into polyolefin film to impart anti-slip properties to the film.

We have found that when particulare high molecular weight high density polyethylene is incorporated into low density ethylene homopolymer the film formed by blowing shows no substantial advantage in anti-slip properties at normal ambient temperatures.

According to the present invention a packaging film comprising a matrix of a thermoplastic polymer and containing a uniformly distributed particulate organic solid is characterised in that the thermoplastic polymer constituting the matrix is a copolymer of ethylene and the particulate organic solid comprises particles with a maximum dimension in the range 50 to 2,000 microns and a minimum dimension of not less than 50 microns.

The copolymer of ethylene may for example contain from 2 to 30%, preferably 4 to 15%, by weight units derived from monomer other than ethylene, for example vinyl acetate, ethyl acrylate or butyl acrylate.

It is preferred to use polymers which can be extruded to form film at temperatures below 220°C, preferably below 200°C. Preferably the polymers have a Melt Flow Index of less than 10g/10min preferably less than 3g/10min but above 0.1g/10min as measured according to BS 2782 Method 720A Condition 4 i.e. 2.6kg load.

The particulate organic solid may comprise any organic solid having the required particle size and physical properties under the conditions of the formation of the film containing the particles so that they retain their separate existence and not diffused into the matric polymer to form an homogenised product. Thus for example the particulate organic solid may comprise a thermoplastics polymer, a non-thermoplastic high melting organic solid or an organic solid substantially resistant to heat softening and which does not undergo substantial decomposition under the conditions of formation of the film. This last class of organic solids may be exemplified by modified and un-modified starches, the modified starches including cross-linked starches which have good heat stability.

The particulate organic solid is preferably one which forms a strong bond with the thermoplastic which constitutes the matrix. By a strong bond we mean a bond which is sufficiently strong that the film may be formed from the mixture of matricx thermoplastic and particulate solid without any substantial weakening and rupture of the film itself occurring during its production as a result of any rupturing of the bond betwen the matrix and the organic solid.

The particulate organic solid is most perferably such that the bond is strong enough to withstand the forces imposed during normal stretching operations employed in film production to the extent that the film may be formed without any substantial production of voids resulting from the rupturing of the bond between the matrix and the organic solid giving rise to an opaque product or any rupturing of the film itself.

In general the bond strength is preferably such that the film product may be stretched at room temperature in the longitudinal and transverse directions respectively, by at least 2:1 preferably at least 4:1 without the film itself rupturing as a consequence of bond rupture.

The strong bond between the matrix and organic solid particles is preferably obtained by using thermoplastic polymer as the particulate organic solid. Exemplary of such thermoplastics polymers are polyamides, such as the nylons, linear polyesters such as polyethylene terephthalate, polycarbonates, polyacetals and polyolefins. The molecular weight of such thermoplastic polymer must of course be sufficiently high that the softening or melting characteristics of the solid particles under the conditions of film formation are such that they substantially retain their separate existence and are not diffused into the matrix polymer to form an homogenised product. It is particularly preferred to use high molecular weight high density ethylene polymers. In the latter case the weight average molecular weight is preferably in excess of 150,000 more preferably in excess of 250,000 and the density is preferably in excess of $0.93g.cm^{-3}$ more preferably in excess of $0.94g.cm^{-3}$ but the Melt Flow Index should be less than 0.1g/10min as measured according to BS 2782, Method 720A using Condition 4 i.e. a load of 2.16kg.

The particulate organic solid may be incorporated into the matrix polymer at any convenient stage before film formation. The particulate organic solid incorporated into the matrix polymer comprises particles having a maximum dimension in the range 50 to 2,000 microns and a minimum dimension not less than 50 microns and preferably at least a predominant proportion by weight of particles having a maximum dimension in the range 500 to 2,000 microns and a minimum dimension of not less than 200 microns.

The choice of particle size is determined principally by the thickness of the main body of film in the final product which should be less than, preferably no greater than half of, the dimension of at least a majority of the particles measured in the same direction in the final product so that the majority of particles inevitably extend beyond the main body of the film. The films employed in the present invention will have a thickness in the main body of the film which is less than 1,000 microns, preferably below 200 microns but above 20 microns, preferably above 35 microns, more preferably above 50 microns.

The quantity of particulate organic solid is preferably not in excess of 2% by weight (based on the total weight of matrix polymer plus additives including the particulate organic solid) and is more preferably in the range 0.2 to 1% by weight.

The film may be formed by any of the known methods but is preferably produced by the well known film blowing process in which polymer is extruded through a die to form a tube which is inflated with air to give a bi-axially stretched polymer film. The film may for example be stretched sufficiently to give a film of thickness 50 microns in the main body of the film.

It will be appreciated that the die opening must be chosen so as not to interfere undesirably with the passage of the organic solid particles during extrusion of the film precursor. It will be appreciated also that the organic solid particles may soften or partially melt during the film forming process but not so that they lose their separate existence or diffuse into the matrix polymer to form an homogeneous product.

Typical film forming conditions which may be employed for an ethylene copolymer matrix thermoplastic containing a high molecular weight high density ethylene polymer would be:

Extrusion melt temperature: 150°C to 220°c.

Blow ratio: at least 1.5:1 preferably at least 2:1.

Longitudinal stretch ratio: at least 1.5:1 preferably at least 2:1.

The films of the present invention are particularly useful for the production of packages comprising a frozen article wrapped in the film. Such packages are the subject of our copending application Case BXL 4984. The film finds particular use in wrapping frozen foodstuffs, in particular meat carcasses. In these packages the major part of the article is at a temperature below 0°C preferably below −15°C.

The present invention will now be further described with reference to the following Example, which is intended to illustrate but in no way limit the scope of the invention:−

Example 1

In accordance with the invention 100 parts of a low density ethylene vinyl acetate copolymer containing 12% by weight of units derived from vinyl acetate and having a density of $0.94g.cm^{-3}$ and a Melt Flow Index of 0.35g/10min (as measured according to BS 2782 Method 720A Condition 4) sold by DuPont de Nemours and Company under the designation EVA 3135X and 0.5 parts of a high molecular weight high density polyethylene having a density of $0.94g.cm^{-3}$, and MFI 2.5g/10min (measured according to BS 2782 Method 720A employing Condition number 7 i.e. with 21.6kg load) having a weight average molecular weight of 290,000 and comprising particles having a maximum dimension in the range 50 to 2,000 microns and a minimum dimension not less than 50 microns a predominant proportion by weight of the particles having a maximum dimension in the range 500 to 2,000 microns and a minimu dimension no less than 200 microns sold by BP Chemicals Limited under the designation of Rigidex H020-54p ("Rigidex" is a trade mark) were mixed together and extruded at a melt temperature of 190°C using a 75mm Shaw extruder fitted with a 150mm Gloenco annular die. A blow ratio of 2.6:1 was used with a longitudinal stretch ratio of 3:1 and an output rate of 30kh per hour. Film was produced as 620mm layflat at a film substance weight of $90g.m^{-2}$ and main body film thickness of about 95 microns.

The co-efficient of dynamic friction between two samples of the film was measured at 20°C and -17°C with the film surfaces a) dry and b) covered with a condensation mist and the results are given in the Table below.

Comparative Test A

This is a comparative test not in accordance with the invention
Film was produced as in Example 1 above but without the incorporation of the high molecular weight high density polyethylene. The co-efficient of friction was measured as before and the results are given in the Table.

Comparative Test B

This is a comparative test not in accordance with the invention.
Film was produced as in Example 1 but using a low density ethylene homo-polymer in place of the ethylene vinyl acetate copolymer. Test results obtained as before are recorded in the Table.

Comparative Test C

This is a comparative test not in accordance with the invention.
Film was produced as in Comparative Test A but replacing the theylene vinyl acetate copolymer with a low density ethylene homo-polymer. Test results obtained as before are recorded in the Table.

| Temperature | Surface Condition | Co-efficient of Friction | | | |
|---|---|---|---|---|---|
| | | Example 1 | Test A | Test B | Test C |
| 20°C | Dry | 1.4 | 0.9 | 0.6 | 0.6 |
| a) −17°C | Dry | 0.8 | 0.3 | 0.5 | 0.4 |
| b) −17°C | Condensation Mist | 0.3 | 0.1 | 0.3 | 0.1 |

The above results illustrate that a surprising increase in anti-slip properties at room temperature is obtained when the particulate organic solid specified is incorporated into an ethylene copolymer as compared with low density polyethylene and that a marked improvement over the film without the additive persists under freezer conditions.

Example 2

The procedure of the film production in Example 1 was repeated but replacing the ethylene vinyl acetate copolymer firstly by: i) an ethylene butyl acrylate copolymer containing 3% by weight of units derived from butyl acrylate, having a Melt Flow Index of 0.2g/10min and supplied by Unifos Kemi AB under the designation NEWS-0320 and secondly by ii) an ethylene ethyl acrylate copolymer containing 15% by weight of units derived from ethyl acrylate, having a Melt Flow Index of 1.5g/10min and supplied by BP Chemicals Belgium under the designation DPDM-6182. The melt temperature in the extruder was in each case 180°C and the films produced had substance weights of $70g.m^{-2}$ and main body film thicknesses of 75 microns. For comparison, film samples iii) and iv) were also produced from the ethylene butyl acrylate copolymer and the ethylene ethyl acrylate copolymer resins respectively without the incorporation of the high molecular weight high density polyethylene.

The co-efficient of dynamic friction between two samples of like film for each of the films produced was measured under the three different conditions specified in Example 1.

| Temperature | Surface Condition | Co-efficient of Friction | | | |
|---|---|---|---|---|---|
| | | i) | iii) | ii) | iv) |
| 20°C | Dry | 0.8 | 0.7 | 1.6 | 1.1 |
| −17°C | a) Dry | 0.6 | 0.5 | 0.9 | 0.7 |
| | b) Condensation mist | 0.3 | 0.1 | 0.3 | 0.1 |

The above results illustrate the greater improvement in anti-slip properties at room temperature obtained using an ethylene copolymer containing a higher proportion of comonomer and that a marked improvement over the film with additive persists under freezer conditions.

Example 3

The procedure of film production in Example 1 was repeated but replacing the ethylene vinyl actetate copolymer by another containing about 5% by weight of units derived from vinyl acetate, having a Melt Flow Index of 0.5g/10min and supplied by A.T.O Chemical Products UK Limited under the designation ATO 1005 VN2. Also the proportion of high density polyethylene was increased to 1 part per 100 parts by weight of the copolymer. The melt temperature in the extruder was 170°C and the film produced had a substance weight of $100gm^{-2}$ and a main body film thickness of 108 microns. For comparison, a film sample was also produced from the ethylene vinyl acetate copolymer containing no high molecular weight high density polyethylene.

The co-efficient of dynamic friction between two samples of like film for each of the films produced was measured as before:-

| Temperature | Surface Condition | Co-efficient of Friction | |
|---|---|---|---|
| | | Example 3 | Comparison |
| 20°C | Dry | 1.0 | 0.7 |
| -17°C | Dry | 0.6 | 0.5 |
| -17°C | Condensation mist | 0.25 | 0.1 |

Example 4

The procedure of film production in Example 1 was repeated but replacing the ethylene vinyl acetate copolymer by another containing 8% by weight of units derived from vinyl acetate, having a Melt Flow Index of 1.5g/10mins and supplied by Bayer UK Limited under the designation Baylon V10 H460. Also the high molecular weight high density polyethylene was replaced by Nylon 11 supplied by ATO Chemical Products UK Limited under the designation Natural HV and having particles with a minimum dimension not less than 60 microns and a maximum dimension no greater than 300 microns. The melt temperature in the extruder was 170°C and the film produced had a substance weight of 47gsm and a main body film thickness of 50 microns.  For comparison, a film sample was also produced from the ethylene vinyl acetate copolymer containing no Nylon 11.

The co-efficient of dynamic friction between two samples of the film for each of the films produced was measured as before-

| Temperature | Surface Condition | Co-efficient of Friction | |
|---|---|---|---|
| | | Example 4 | Comparison |
| 20°C | Dry | 1.0 | 0.7 |
| -17°C | Dry | 0.6 | 0.5 |
| -17°C | Condensation mist | 0.25 | 0.1 |

Claims:

1. A packaging film comprising a matrix of a thermoplastic polymer and a uniformly distributed particulate organic solid is characterised in that the thermoplastic polymer constituting the matrix is a copolymer of ethylene and the particulate organic solid comprises particles with a maximum dimension in the range 50 to 2,000 microns and a minimum dimension of not less that 50 microns.

2. A packaging film according to Claim 1 wherein the copolymer of ethylene contains 4 to 15% by weight of units derived from a monomer other than ethylene.

3. A packaging film according to Claim 1 or 2 wherein the polymer forming the matrix is a polymer which can be extruded to form film at a temperature below 220°C preferably below 200°C.

4. A packaging film according to any one of the preceding claims where the particulate solid is one which forms a strong bond with the thermoplastic polymer which constitutes the matrix.

5. A packaging film according to Claim 4 wherein the bond is such that the film is formed without any substantial production of voids resulting from bond rupture giving rise to an opaque product or any rupturing of the film itself.

6. A packaging film according to Claim 4 wherein the bond is such that the film may be stretched at room temperature in the longitudinal and transverse directions respectively, by at least 2:1 preferaby at least 4:1 without the film itself rupturing as a consequence of bond rupture.

7. A packaging film according to any of the preceding claims wherein the particulate organic solid is a thermoplastics polymer.

1

8.    A packaging film as in Claim 7 wherein the particulate organic solid is a high molecular weight high density polymer of ethylene.

9.    A packaging film according to Claim 8 wherein the high molecular weight high density ethylene polymer has a weight average molecular weight in excess of 150,000 and preferably in excess of 250,000 and has a density in excess of $0.93g.cm^{-3}$ preferably in excess of $0.94g.cm^{-3}$.

10.   A packaging film according to any one of the preceding claims wherein the quantity of particulate organic solid is not in excess of 2% by weight based on the total weight of matrix polymer and additives including the particulate organic solid.

11.   A packaging film according to Claim 10 wherein the quantity of particulate organic solid is in the range 0.2 to 1% by weight.

12.   A packaging film according to any one of the preceding claims wherein the particulate organic solid comprises particles containing at least a predominant proportion by weight of particles having a maximum dimension in the range 500 to 2,000 microns and a minimum dimension of no less than 200 microns.

13.   A packaging film according to any one of the preceding claims wherein the thickness of the main body of the film is no greater than half of the dimension of at least a majority of the particles measured in the same direction.